# EUROPEAN PATENT APPLICATION

(11) **EP 3 949 718 A1**
(43) Date of publication of application: **09.02.2022**
(21) Application number: 21189158.5
(22) Date of filing: 02.08.2021
(51) Int. Cl.: A01F 15/08, A01F 15/10, A01D 1/00, A01F 1/00

(54) **PRESS FOR PRODUCING BALES OF FORAGE AND THE LIKE**

(30) Priority: 03.08.2020 IT 202000018931
(71) Applicant: Feraboli, Francesco, 26100 Cremona (IT)
(72) Inventor: PEDRONI, Giuseppe Mario, 26011 CASALBUTTANO ED UNITI CR (IT); BUDU, Alexandru, 37044 COLOGNA VENETA VR (IT)
(74) Representative: Modiano, Micaela Nadia

(57) **Abstract**

A press (1) for producing bales of forage and the like, comprising a supporting structure (2) provided with wheels (3), the supporting structure being adapted to support a plurality of rollers (4, 5, 6, 7, 8, 22, 30) and a collection and feeding device (20, 35), at least one roller of the plurality of rollers being actuated by a hydraulic motor (9, 10, 11, 24, 31, 32), the at least one hydraulic motor being actuated by at least one hydraulic pump.

## Description

The present invention relates to a press for producing bales of forage or the like. More particularly, the invention relates to a press for producing bales, of the type comprising a supporting structure mounted on wheels and with a plurality of rollers and a conveyor of movable belts or bars, arranged so as to form a pressing chamber in which the forage or other collected material is then introduced.

The invention can be applied both to presses of the fixed-chamber type, i.e., with a series of rollers or a conveyor with bars or belt sections and/or combinations of the three systems, which define the pressing chamber for forming bales having a single predetermined diameter, defined by the output of said press, and to variable-chamber presses, in which there are belts or ribbons or a conveyor with bars engaged on a limited number of rollers, in order to form bales having an adjustable diameter set by the operator.

As is known, presses of the above mentioned type comprise a supporting structure which is adapted to support the pressing rollers, and is constituted by a frame in the form of a box-like structure, composed of mutually welded and/or screwed sheet metal elements. The rollers of the machine are actuated by means of a chain transmission system, which in some cases might be complex and inefficient, and which often entails periodic maintenance operations in order to adjust the tension of the chains and lubricate the various components that compose the transmission.

Furthermore, the assembly of the various elements of the press is subject to breakages and wear due to the high pressure that occurs in the pressing chamber during operation.

The aim of the present invention is to provide a press for producing bales of forage and the like which has a strong, simplified structure and does not require the maintenance operations of presses of the known type.

Within this aim, an object of the present invention is to provide a press for producing bales of forage and the like that allows to adjust the rotation speed of the various rollers of the press, as a function of the product and of the collection conditions.

Another object of the present invention is to provide a press for producing bales of forage and the like in which the number of gears of the chain or belt transmission of the various rollers is completely eliminated or reduced as minimal as possible.

Another object of the present invention is to provide a press for producing bales of forage and the like in which the direction of rotation of the rollers can be controlled manually and/or automatically.

Not least object of the present invention is to provide a press for producing bales of forage and the like which is highly reliable, relatively simple to provide and at competitive costs.

This aim and these and other objects which will become better apparent hereinafter are achieved by a press for producing bales of forage and the like, which comprises a supporting structure provided with wheels, said supporting structure being adapted to support a plurality of rollers and a collection and feeding device, at least one roller of said plurality of rollers being actuated by a hydraulic motor, said at least one hydraulic motor being actuated by at least one hydraulic pump.

Further characteristics and advantages of the invention will become better apparent from the description of preferred but not exclusive embodiments of the press according to the invention, illustrated by way of non-limiting example in the accompanying drawings, wherein:
Figure 1 is a front perspective view of the press according to the present invention;
Figure 2 is a rear perspective view of the press according to the present invention;

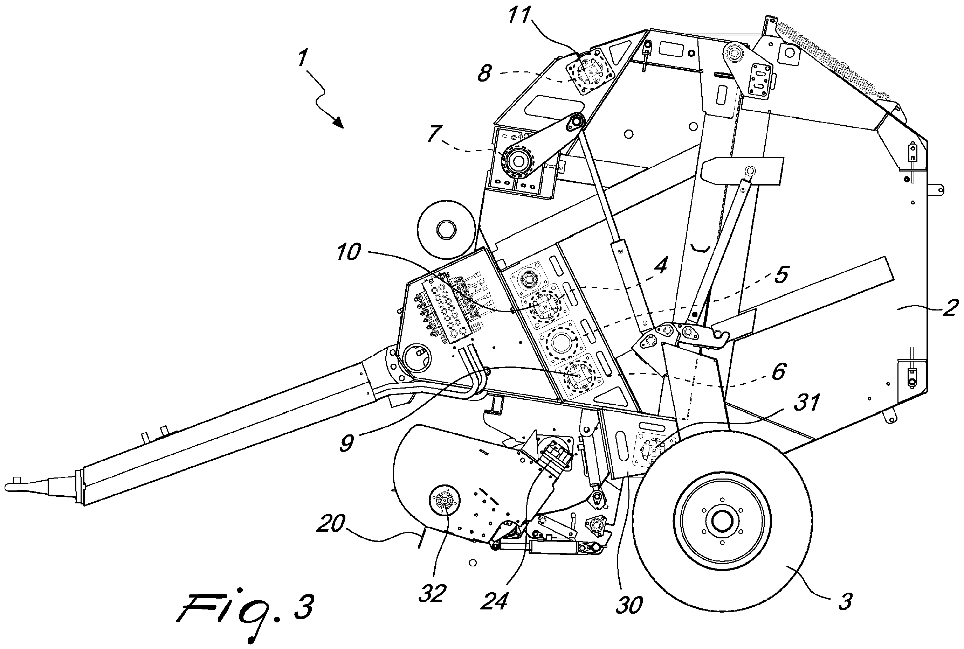

Figure 3 is a side view of the press according to the present invention;
Figure 4 is a perspective view of the press according to the present invention with a detail of the product conveyance belts;
Figure 5 is a front view of the press of Figure 4;
Figure 6 is an enlarged-scale perspective view of a detail of Figures 4 and 5.

With reference to the figures, the press for producing bales of forage and the like, according to the present invention, is generally designated by the reference numeral 1.

The press according to the invention comprises a supporting structure 2 mounted on wheels 3.

The supporting structure supports a plurality of rollers 4, 5, 6, 7 and 8, 30, together with a conveyor of movable belts or bars, which are not shown.

Conveniently, at least one and preferably all the rollers 4, 5, 6, 7, 8 and 30 are actuated by a respective hydraulic motor, which can be arranged at the head of each roller, as shown in the figures, or be arranged inside said roller.

It should be noted that in the present description the term rollers is understood to also refer to the collection assembly (reel and corresponding screw feeders or conveyor belts) known as pick-up and the feeding assembly with alternating (feeder) or rotary (rotor) movement with or without cutting apparatus.

In the figures, the hydraulic motors that are visible are designated by the reference numerals 9, 10, 11, 24, 31, 32 and are arranged on one side of the machine, while the respective similar hydraulic motors are arranged at the opposite side of the machine. Essentially, the rollers 4, 5, 6, 7, 8 and 30 have hydraulic motors arranged on one side of the press and others on the opposite side.

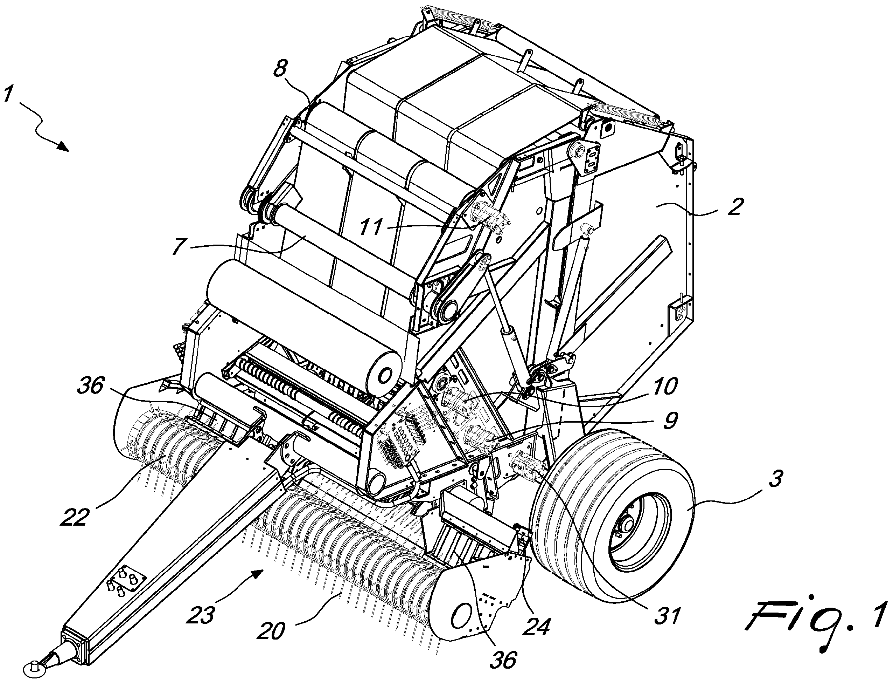

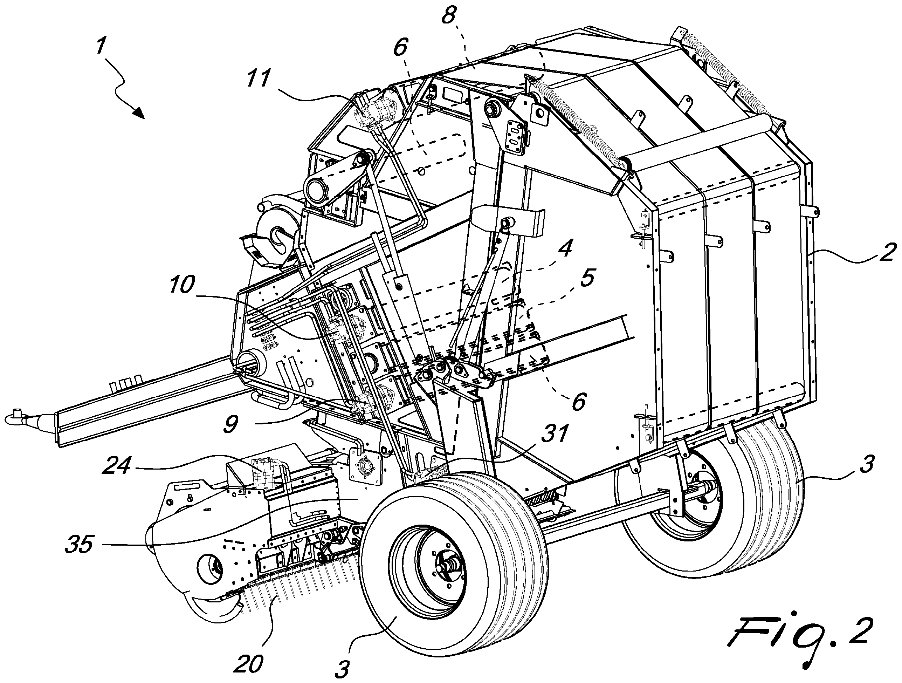

Figure 1 is a front perspective view of the press, while Figure 2 is a rear perspective view thereof.

According to the invention, therefore, the press provides an actuation of the various rollers by means of hydraulic motors, therefore substantially eliminating chains and gears for transmission.

If only one of the rollers, or some of the rollers, are provided with hydraulic motors, said hydraulic motors actuate the other rollers by means of a coupling of the gear of the chain and/or belt and/or module transmission.

The rollers can also be moved by one motor for each side of the roller. Said motors can operate synchronously or one of the two may intervene if the other requires this.

In any case, the number of mechanical transmissions provided for the actuation of the various rollers is reduced, with the advantage of simplifying the structure of the press and the maintenance thereof.

The hydraulic motors designed to actuate the rollers can be actuated in one direction or with a reversed motion, depending on the requirements, and especially in order to allow automatic disentanglement in the event of clogging.

The reversed actuation of the hydraulic motor connected to said roller substantially imparts to said roller a rotation in the opposite direction with respect to normal rotation, in order to therefore disentangle the material that might have become clogged.

Furthermore, the hydraulic motors, and therefore the respective rollers, may be actuated with speeds which are mutually different or equal but adjustable as a function of the product and of the collection conditions.

Furthermore, the machine provides a feeding device or assembly 35 (rotor or alternating feeder with or without cutting device) driven by one or more hydraulic motors.

Furthermore, the product collection device or assembly, designated by the reference numeral 20, also can be actuated by an appropriate hydraulic motor arranged at the respective roller 22 and not shown in the figures.

Finally, the product conveyance device 23, arranged on a pick-up or just after, constituted by screw feeders or by vertical or horizontal conveyor belts, is also actuated by one or more hydraulic motors 24, one for each side of the press.

In the case of belts, two belts 36, one for each side, run in opposite directions, conveying the product toward the center.

The belts 36 are actuated by two hydraulic motors (one for each belt), which can work in a synchronous manner or independently at a constant speed or at variable speed as a function of the load derived from the product to be conveyed.

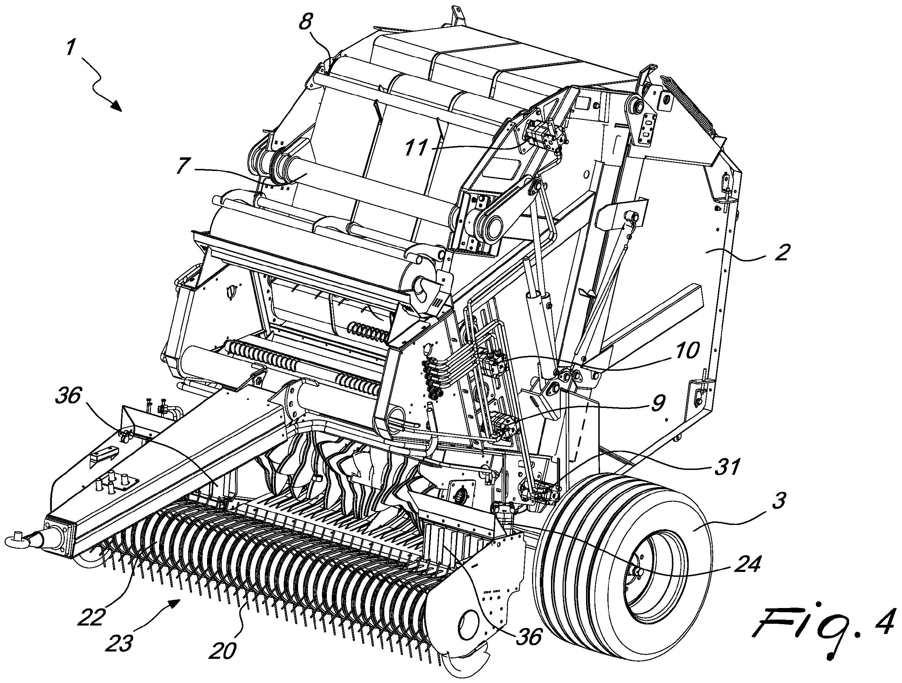

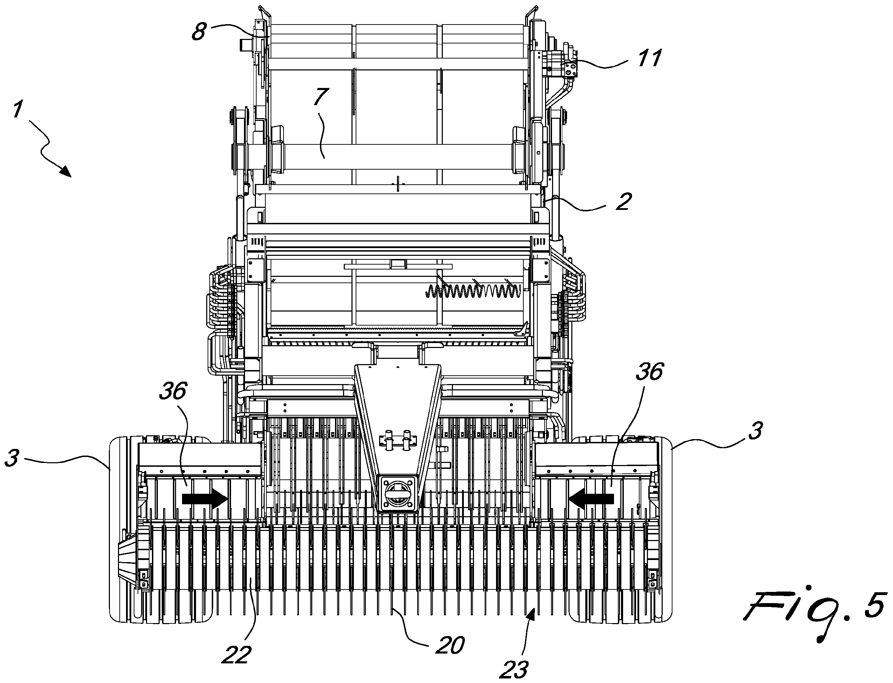

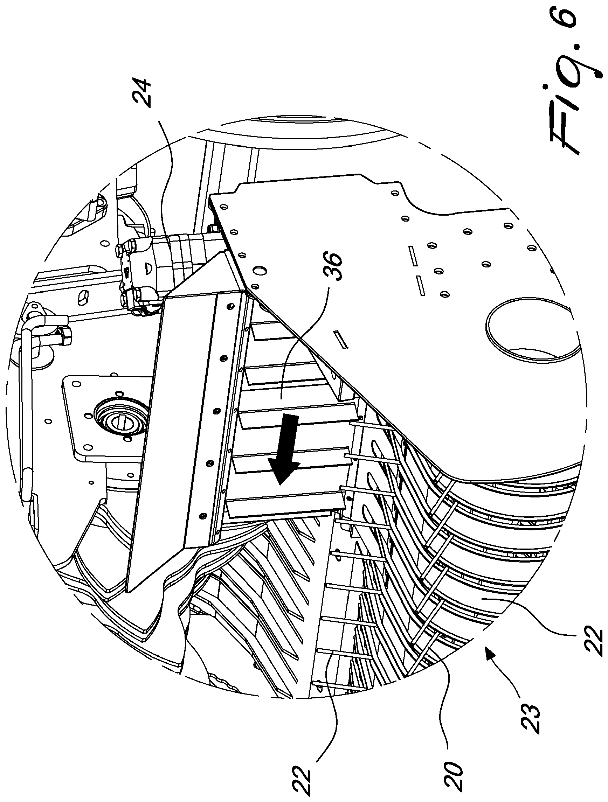

The belts 36 can be mounted on the machine in a vertical manner (as shown in Figures 4, 5 and 6) or in a horizontal manner.

The belts can be actuated not only by hydraulic motors but also by electric motors or by chain transmissions, module gears or transmission with angled drive at 90° or at a different angle.

It is also possible to optimize the power levels required during the various working steps of the press, increasing its efficiency. For example, during the step for tying and expelling the bale of product, the collection and feeding devices remain motionless, and do the same when any reversing maneuver is performed.

The press according to the invention draws the movement from a coupler actuated by a cardan joint applied to a power take-off of a tractor, which in turn drives one or more hydraulic pumps which, by means of a distributor and hydraulic valves, on board the press, moves the elements of the press. The press can also operate directly connected to the distributor of the tractor or on a self-propelled machine.

If the press is provided with vertical and/or horizontal belts for conveying the product, instead of the horizontal screw feeders, the belts also are preferably actuated by a hydraulic motor.

Conveniently, the press according to the invention can be provided with an alternator (not shown in the figures), which draws motion from a cardan joint or other driving element arranged in the machine (roller) and powers a battery which in turn distributes the necessary current to the press.

Said current allows to manage the electric valves required for the operation of the various elements and any electric motors arranged on board the machine in order to move the rollers with electric motors, roller drives or electric actuators for managing said machine. Consequently, said current is also used to power all the safety devices and the various monitors, control or service units and all the electrical accessories on board the machine (such as for example the service lights).

In practice it has been found that the press according to the invention fully achieves the intended aim and objects, since it allows to have an actuation of the respective rollers by means of hydraulic motors, eliminating therefore substantially the gear or chain and belt transmissions, for all the rollers.

Even if only some of the rollers are actuated by means of the hydraulic motors, and the others are actuated by gears or chain or module and belt transmission, the number of mechanical parts, which can wear out and therefore require maintenance, is reduced in any case.

The press thus conceived is susceptible of numerous modifications and variations, all of which are within the scope of the accompanying claims.

All the details may furthermore be replaced with other technically equivalent elements.

In practice, the materials used, as well as the contingent shapes and dimensions, may be any according to the requirements and the state of the art.

The disclosures in Italian Invention Patent Application No. 102020000018931, from which this application claims priority, are incorporated by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A press (1) for producing bales of forage and the like, comprising a supporting structure (2) provided with wheels (3), said supporting structure being adapted to support a plurality of rollers (4, 5, 6, 7, 8, 22, 30) and a collection and feeding device (20, 35), at least one roller of said plurality of rollers being actuated by a hydraulic motor (9, 10, 11, 24, 31, 32), said at least one hydraulic motor being actuated by at least one hydraulic pump.

2. The press according to claim 1, **characterized in that** said hydraulic motor (9, 10, 11, 24, 31, 32) is arranged at a leading end of said at least one roller (4, 5, 6, 7, 8, 22, 30).

3. The press according to claim 1, **characterized in that** said hydraulic motor (9, 10, 11, 24, 31, 32) is arranged inside said at least one roller (4, 5, 6, 7, 8, 22, 30).

4. The press according to one or more of the preceding claims, **characterized in that** said hydraulic motor (9, 10, 11, 24, 31, 32) that actuates said at least one roller (4, 5, 6, 7, 8, 22, 30) is adapted to actuate all the other rollers by means of a gear or belt or chain transmission.

5. The press according to one or more of the preceding claims, **characterized in that** all the rollers (4, 5, 6, 7, 8, 22, 30) of said press are actuated by respective hydraulic motors (9, 10, 11, 24, 31, 32) which are arranged respectively at one side of the press and/or at the opposite side.

6. The press according to one or more or the preceding claims, **characterized in that** said collection device (20) is actuated by a respective hydraulic motor.

7. The press according to one or more of the preceding claims, **characterized in that** said feeding device (35) is actuated by a pair of respective hydraulic motors which are arranged on either side of the press.

8. The press according to one or more of the preceding claims, **characterized in that** said hydraulic motors (9, 10, 11, 24, 31, 32) can be controlled in their direction of rotation.

9. The press according to one or more of the preceding claims, **characterized in that** said hydraulic motors (9, 10, 11, 24, 31, 32) can be adjusted in terms of speed in order to adjust the speed of said rollers actuated by said hydraulic motors as a function of the product and of the collection conditions.

10. The press according to one or more of the preceding claims, **characterized in that** it draws motion from a power take-off of a tractor.

11. The press according to one or more of the preceding claims, **characterized in that** it comprises a device for conveying the product which comprises a pair of belts (36) adapted to move toward each other.
